# EUROPEAN PATENT SPECIFICATION

(11) **EP 2 394 444 B1**
(45) Date of publication and mention of the grant of the patent: **14.08.2013**
(21) Application number: 09779010.9
(22) Date of filing: 03.02.2009
(51) Int. Cl.: H04R 27/00, H04N 7/14

(54) **CONFERENCE MICROPHONE SYSTEM**
KONFERENZ-MIKROFONSYSTEM
SYSTÈME DE MICROPHONES DE CONFÉRENCE

(43) Date of publication of application: 14.12.2011
(73) Proprietor: Squarehead Technology AS, 0410 Oslo (NO)
(72) Inventor: KJØLERBAKKEN, Morgan, N-0481 OSLO (NO)
(74) Representative: Onsagers AS
(86) International application number: PCT/EP2009/051199
(87) International publication number: WO 2010/088952

(56) References cited:
- EP-A- 1 578 057
- US-A1- 2008 184 115

## Description

### Technical field

The present invention concerns directive controlling of recorded sound. More specifically the invention concerns a method and system for controlling sound from an audience by providing and controlling virtual microphones.

### Prior art

When performing a conference or meeting, typically one or more speakers will address an audience with several participant located at an area in front of the speaker(s).

When one or more participants want to say something, a microphone must be passed to that person for the voice to be heard by all participants. This is a cumbersome and time consuming method.

There is however systems comprising microphone arrays for picking up and amplify sound from specific locations.

Applicants own publication PCT/NO2006/000334 describes a method and system for digitally directive focusing and steering of sampled sound within a target area for producing a selective audio output to accompany video. This is performed by receiving position and focus data from one or more cameras shooting an event, and by using this input data for generating relevant sound output together with the image.

This system will not be practical for controlling sound with ease from one or more specific locations in an audience. When operating a camera, only one location can be pointed out at a time, i.e. the location where the lens is pointed and zoomed at. Further, the use of this type of interface when the controlling of sound is the main purpose is not regarded as user-friendly.

EP-1 578 057 A discloses a system with a control device, control software and infrastructure control modules. The modules can be individually activated for controlling multimedia end terminals, e.g. projectors, based on the control software via touch screens that are connected with RS232 serial interfaces. Information relating to predefined possible positions of participants is presented on the touch screen.

The present invention describes a user friendly method and system for controlling one or more "virtual" microphones. A virtual microphone can be created by performing simultaneous DSP (Digital signal processor) processing of the signals from a combination of the individual microphone array elements. This is further described in the cited publication above.

The problem to be solved by the present invention may be regarded as how to provide a method and system for easy access and control of virtual microphones.

According to the invention, this problem has been solved by providing a touch sensitive display showing an overview image of the audience, and using this display for controlling one or more virtual microphones.

### Summary

The present invention comprises a method for controlling selective audio output of captured sounds from any location in an audience by means of a system comprising at least one microphone array located above or in front of said audience, at least one camera focusing on the audience. The method comprises the following steps performed in a signal processing device:
- receiving an overview image of the audience from said camera, and sound from said audience by means of said microphone array;
- presenting said overview image of the audience together with control objects on a display which can detect the presence and location of a touch input at a (x, y) location within the area of the display;
- receiving touch input(s) at one or more (x, y) location(s) on said display, instructing a specific action to be performed at corresponding location(s) in the audience, and
- applying signal processing in said signal processing device for performing said action by controlling steering, focus and sound level of the sound from the microphones in said microphone array, thus controlling one or more virtual microphones at one or more location(s) in the audience, said location(s) corresponds to the input location(s) on the display.

The invention is also described by a processing device and system for performing the same. This is further defined in the main claims.

Further features are defined in the accompanying dependent claims.

### Detailed description

In the following, the invention will be described in detail with reference to the drawings where:
Fig. 1 shows the system for controlling a microphone array;
Fig. 2 shows the display for controlling virtual microphones for an audience;
Fig. 3 shows a system for controlling several microphone arrays.

The invention is described by a system for controlling selective audio output of captured sounds from any location in an audience.

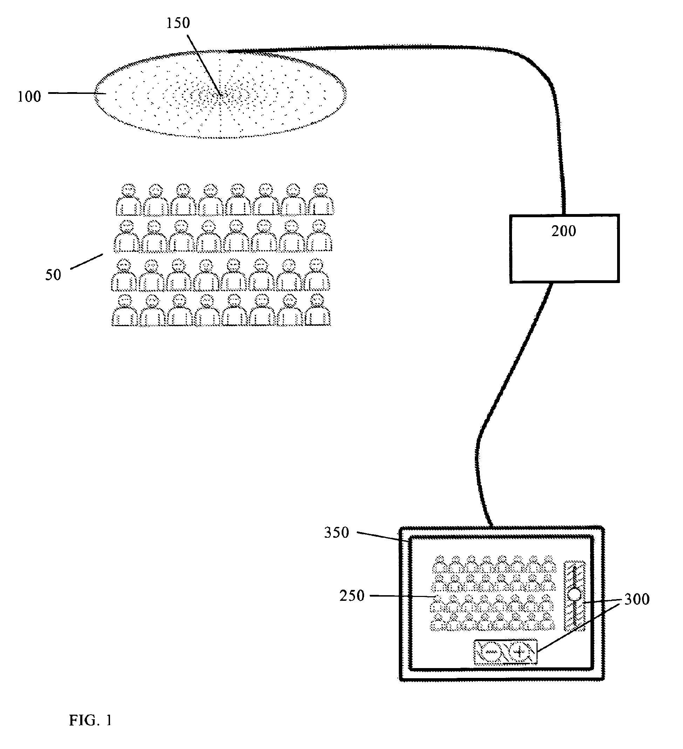

Fig. 1 shows the system for controlling a microphone array for enabling the selective audio output.

The system comprises a processing device 200, at least one microphone array 100 located above or in front of the audience 50, and at least one camera 150 focusing on the audience 50, and a display 350 which can detect the presence and location of a touch input, used for controlling one or more virtual microphones at one or more location(s) in the audience 50. All said units are connected to each other, either by wire, or wirelessly, or in a combination of these.

The processing device 200 is used for controlling the selective audio output of the captured sounds from any location in an audience 50, and comprises means for receiving an overview image 250 of the audience 50 from said camera 150, together with sound from said audience 50 by means of said microphone array 100. The received image will be processed before it is presented on the display 350.

The sound is captured by a unit comprising a broadband microphone array located above or in front of the audience.

One or more cameras 150 can be used for capturing images of the audience 50. One or more cameras may be integrated in a unit comprising said microphone array 100, or the cameras may be positioned at other locations for capturing images of the audience 50.

The cameras used can be both video camera and still picture cameras, or a combination of these.

A compact and robust system for both recording sound and image is achieved by integrating the camera(s) in the unit comprising the microphone array 100.

In order to capture all participants in an audience with only one camera, the camera can be equipped with a fisheye lens. It is known that the resulting images from such a lens will produce barrel distortion. This will be corrected in the processing device 200 before the resulting undistorted images are presented on the display 350.

For larger audiences two or more microphone arrays 100 located at different locations above or in front of the audience 50 may be used. This set-up will be further described below.

In the following the controlling of the system will be described. The processing device 200 will coordinate and control selective audio output of captured sounds from any location in an audience 50. Although more than one camera 150 and microphone array 100 can be used according to the invention, only one camera and microphone array will, for simplification, be included in the following description of the processing device 200.

The processing device 200 comprises means for receiving an overview image 250 of the audience 50 from a camera 150, together with sound from an audience 50 by means of a microphone array 100.

The processing device 200 will then process the image by sizing it to fit on the display 350, removing unwanted artefacts, backgrounds and distortions before the image is presented on the display 350 as an overview image 250 of the audience 50 together with control objects 300.

By using a display 350 that can detect the presence and location of a touch input at an (x, y) location within area of the display 350 it is possible to control the signal processing of the signals from each microphone in the microphone array 100. This signal processing is performed in the processing device 200.

The processing device 200 comprises means for detecting touch input(s) at one or more (x, y) location(s) on said display 350, instructing it to perform a specific action at corresponding location(s) in the audience 50.

The specific action to be performed will depend on the nature of the specific touch input(s), and at which location(s) (x, y) on the display 350.

Based on this, the processing device 200 will carry out the necessary signal processing for controlling steering, focus and sound level of the sound from the microphones in said microphone array 100, thus controlling one or more virtual microphones at one or more location(s) in the audience 50. This signal processing is described in said PCT/NO2006/000334.

The controlling of steering and focusing at one or more specific locations in the audience 50 is performed by implementing 3-dimensional positioning (x, y, z) of one or more locations relative to the microphone array 100. Z is calculated by the processing device 200 from the (x, y) location in the audience and the known height and possible tilt angle of the microphone array 100 above or in front of the audience 50.

The processing device 200 also comprises means for adjusting for geometry aspects influencing sound propagation and acoustic in the room where the audience 50 is located. It also comprises means for adjusting barrel distortion produced by a fisheye lens used on a camera 150.

The processing device 200 can be a stand alone unit connected to said display 350 and microphone array 100. It can also be a unit integrated in said display 350 or in the microphone array 100.

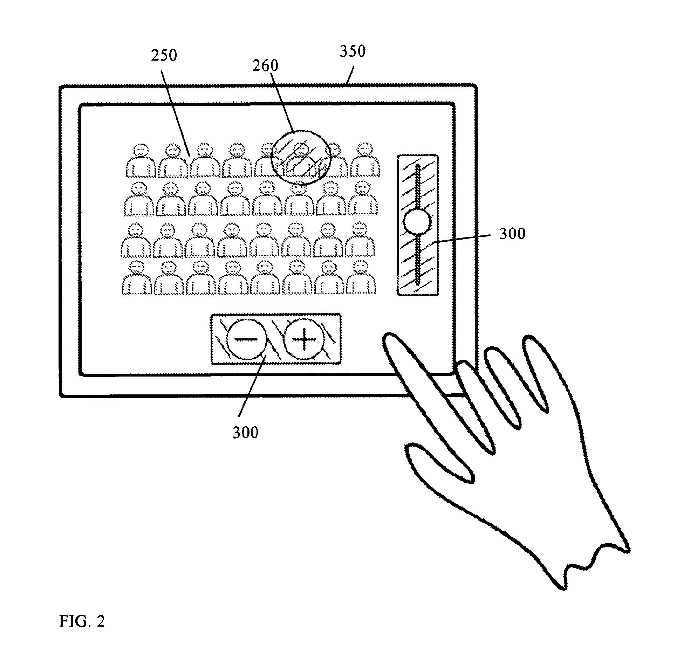

Figure 2 shows the display for controlling virtual microphones for an audience. The person controlling the display 350 will be presented with an overview image 250 of the audience 50 together with control objects 300 on a display 350. An input or command will be given by touching the display 350 at one or more (x, y) location(s). This will result in a specific action to be performed at corresponding location(s) in the audience 50. The processing device 200 will carry out the command by applying signal processing for performing the action according to the input command by controlling steering, focus and sound level of the sound from the microphones in said microphone array 100. This will control one or more virtual microphones at one or more location(s) in the audience 50.

When executing a touch input, i.e. pressing the screen with a finger or pointing device, at a location on said display 350 showing the image 250 of the audience 50, the focus to or from that location will change by making the location an active area 260 if it was currently inactive, or the other way around inactive if it was currently an active area 260. When an area of the display 350 is an active area 260, it will be indicated on the display 350, and the processing device 200 will control the microphone array 100 to focus on that area, thus providing a virtual microphone for the active area 260. When the active area is pressed again it will become inactive, thus remove the virtual microphone.

More than one area of the audience 50 may be activated at the same time, thereby providing more that one virtual microphone.

When pressing the control object 300, the processing device 200 will control sound level of active virtual microphone(s). Pressing the + sign will add an active area 260, and pressing the - sign will remove an active area 260.

A pressing and dragging motion of an active area 260 will move this area to another location on said display 350. This will cause the signal processing device 200 to change the steering and focus of sound from one corresponding location in the audience to another, resulting in a fading out to fading in effect.

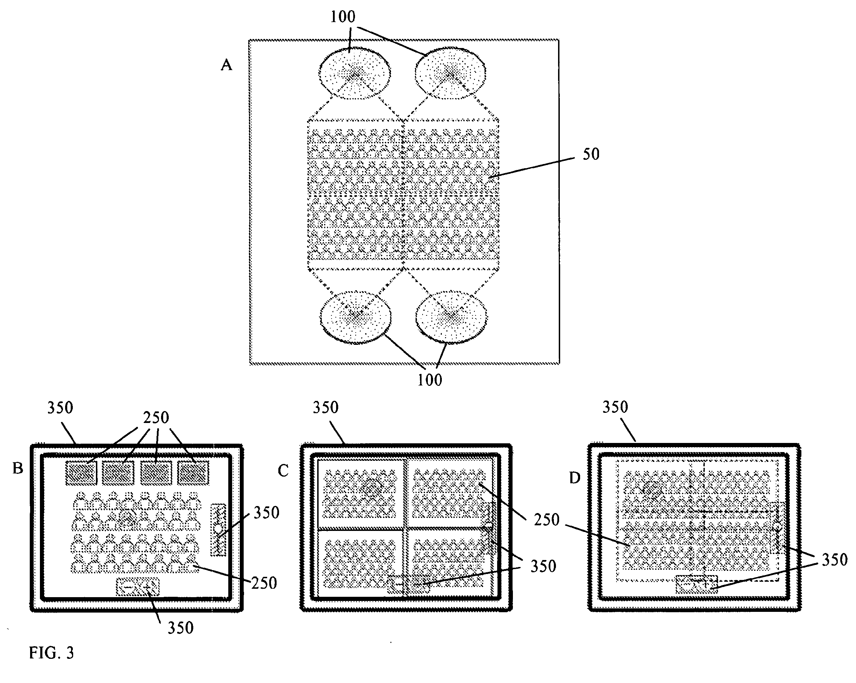

Figure 3 shows a system for controlling several microphone arrays. In this implementation of the invention, the system comprises two or more microphone arrays 100 located at different locations above or in front of the audience 50. These are all connected to the processing device 200.

Figure 3A show an audiences 50 covered by four microphone arrays 100 with integrated cameras 150.

The processing device 200 will in this case comprise means for receiving sound signals from several microphone arrays 100, i.e. four, together with images from the cameras 50 for presenting processed images from the cameras on the display 350 together with said control object 300.

The different cameras 150 and microphone arrays 100 will each cover different areas of an audience 50. These areas will then be presented on the display 350.

Figure 3B shows a first way of presenting the audience. It shows one area in focus being displayed larger than the other areas. Performing a touch input on one of the smaller areas will change that area to be in focus for controlling the virtual microphones.

Figure 3C shows a second way of presenting the audience. All areas are presented equally sized on the display 350. This will enable easy control of the sound from a virtual microphone from a first location in one area to a second location in another area by performing a touch and drag action.

Figure 3D shows all four areas in fig. 3A, covered by the different microphone arrays and cameras, as one resulting total area image covering the audience 50. This is achieved in the processing device 200 by processing the images by seamlessly stitching the images 250 of each area together.

## Claims

1. A method for controlling selective audio output of captured sound from any location in an audience (50) by means of a system comprising at least one microphone array (100) located above or in front of said audience (50), at least one camera (150) focusing on the audience (50), and where the method is
performing the following steps in a signal processing device (200):
- receiving an overview image (250) of the audience (50) from said camera (150), and sound from said audience (50) by means of said microphone array (100);
- presenting said overview image (250) of the audience (50) together with control objects (300) on a display (350) which can detect the presence and location of a touch input at a x,y location within the area of the display (350);
- receiving touch input(s) at one or more x,y location(s) on said display (350), instructing a specific action to be performed at corresponding location(s) in the audience (50), and
- applying signal processing in said signal processing device (200) for performing said action by controlling steering, focus and sound level of the sound from the microphones in said microphone array (100), thus controlling one or more virtual microphones at one or more location(s) in the audience (50), said location(s) corresponds to the input location(s) on the display (350).

2. A method according to claim 1, **characterized in that** receiving a touch input at a location on said display (350) showing the image (250) of the audience (50) will change the focus to or from that location by making the location an active area (260) if currently inactive, or an inactive area (260) if currently an active area (260), and where an active area (260) is an area (260) provided with a virtual microphone, and an inactive area is not provided with a virtual microphone.

3. A method according to claim 1 and 2, **characterized in that** receiving a touch input at a location on said display (350) showing a control object (300), will control sound level of active virtual microphone(s), and will add or remove virtual microphones.

4. A method according to claim 1, **characterized in that** receiving a touch input at a x,y location on said display (350) followed by a dragging motion to another location on said display (350) will cause the signal processing device (200) to change the steering and focusing of sound from one corresponding location in the audience to another.

5. A method according to claim 1, **characterized in that** the steering and focusing at one or more specific locations in the audience (50) is performed by implementing 3-dimensional positioning for one or more locations relative to the microphone array (100), where focusing is calculated from said x,y location and the known height and possible tilt angle of the microphone array (100) above or in front of the audience (50).

6. A method according to claim 5, **characterized in that** the signal processing including 3-dimensional positioning also includes adjusting for the geometry aspects in the room influencing sound propagation in the room where the audience (50) is located.

7. A method according to claim 1, **characterized in that** the method comprises use of several cameras (150) and microphone arrays (100) each covering different areas of an audience (50), and where these areas are presented on the display (350) with one area in focus being displayed larger than the other areas, and where a touch input on one of the smaller areas will change that area to be in focus for controlling the virtual microphones.

8. A method according to claim 1 and 4, **characterized in that** the method comprises use of several cameras (150) and microphone arrays (100) each covering different areas of an audience (50), and where these areas are presented equally sized on the display (350), thus enabling controlling the sound from the virtual microphones from a first location in one area to a second location in another area by performing a touch and drag action.

9. A method according to claim 1 and 8, **characterized in that** the method comprises use of several cameras (150) and microphone arrays (100) each covering different areas of an audience (50), and where these areas are presented on the display (350) as one total area covering the audience (50) by seamlessly stitching the images (250) of each area together.

10. A processing device (200) for controlling selective audio output of captured sounds from any location in an audience (50) by means of a system comprising at least one microphone array (100) located above or in front of the audience (50), at least one camera (150) focusing on the audience (50), wherein the processing device (200) comprises:
- means for receiving an overview image (250) of the audience (50) from the camera (150), and sound from said audience (50) from the microphone array (100);
- means for presenting said overview image (250) of the audience (50) together with control objects (300) on a display (350) for detecting the presence and location of a touch input at an x,y location within area of the display (350);
- means for receiving one or more x,y location(s) of touch input(s) on said display (350), instructing the signal processing device (200) to perform a specific action at corresponding location(s) in the audience (50), and
- means for performing said specific action by controlling steering, focus and sound level of the sound from the microphones in said microphone array (100), thus controlling one or more virtual microphones at one or more location(s) in the audience (50), said location(s) corresponds to the input location(s) on the display (350).

11. A processing device (200) according to claim 10, **characterized in that** the processing device (200) for controlling steering and focusing at one or more specific locations in the audience (50) comprises means for implementing 3-dimensional positioning of one or more locations relative to the microphone array (100), where focusing is calculated by the processing device (200) from said x,y location and the known height and possible tilt angle of the microphone array (100) above or in front of the audience (50).

12. A processing device (200) according to claim 10, **characterized in that** in comprises means for adjusting for geometry aspects in the room influencing sound propagation in the room where the audience (50) is located.

13. A processing device (200) according to claim 10, **characterized in that** in comprises means for adjusting barrel distortion produced by a fisheye lens used on said camera (150) for presenting an undistorted images on the display (350).

14. A processing device (200) according to claim 10, **characterized in that** in comprises means for receiving sound signals from two or more microphone arrays (100) and images from two or more cameras (50) for presenting the images from the cameras on said display (350) together with said control objects (300).

15. A processing device (200) according to claim 10, **characterized in that** it is integrated in said display (350).

16. A processing device (200) according to claim 10, **characterized in that** it is integrated in said microphone array (100).

17. A processing device (200) according to claim 10, **characterized in that** it is a stand alone unit connected to said display (350) and microphone array (100).

18. System for controlling selective audio output of captured sounds from any location in an audience (50), **characterized in** comprising a processing device (200) according to claim 10, at least one microphone array (100) located above or in front of the audience (50), and at least one camera (150) focusing on the audience (50), and a display (350) which can detect the presence and location of a touch input, used for controlling one or more virtual microphones at one or more location(s) in the audience (50).

19. System according to claim 18, **characterized in that** said camera (150) is integrated in a unit with said microphone array (100).

20. System according to claim 18, **characterized in** comprising two or more microphone arrays (100) located at different locations above or in front of the audience (50), and connected to said processing device (200).

## Patentansprüche

1. Verfahren zum Steuern von selektiven Audioausgangssignalen von erfasstem Schall von irgendeinem Ort in einem Publikum (50) mittels eines Systems, das mindestens eine Mikrofonanordnung (100), die sich oberhalb von oder vor dem Publikum (50) befindet, und mindestens eine Kamera (150) aufweist, die auf das Publikum (50) fokussiert ist,
wobei das Verfahren die folgenden Schritte in einer Signalverarbeitungseinrichtung (200) durchführt:
- Empfangen eines Gesamtbildes (250) des Publikums von der Kamera (150) und von Schall von dem Publikum (50) mittels der Mikrofonanordnung (100);
- Präsentieren des Gesamtbildes (250) des Publikums (50) zusammen mit Steuerungsobjekten (300) auf einem Display (350), das die Anwesenheit und den Ort einer Berührungseingabe an einem x,y-Ort innerhalb des Bereiches des Displays (350) detektieren kann;
- Empfangen von Berührungseingaben an einem oder mehreren x,y-Orten auf dem Display (350) und Vorgeben einer spezifischen Aktion, die an entsprechenden Orten in dem Publikum (50) durchzuführen ist; und
- Verwenden der Signalverarbeitung in der Signalverarbeitungseinrichtung (200) zum Durchführen der Aktion durch Steuerung der Lenkung, der Fokussierung und des Schallpegels des Schalls von den Mikrofonen in der Mikrofonanordnung (100) und damit Steuerung von einem oder mehreren virtuellen Mikrofonen an einem oder mehreren Orten in dem Publikum (50), wobei der Ort bzw. die Orte dem Eingabeort bzw. den Eingabeorten auf dem Display (350) entsprechen.

2. Verfahren nach Anspruch 1,
**dadurch gekennzeichnet,**
**dass** das Empfangen einer Berührungseingabe an einem Ort auf dem Display (350), welches das Bild (250) des Publikums (50) zeigt, den Fokus auf den oder von dem Ort ändert, indem der Ort zu einem aktiven Bereich (260) gemacht wird, wenn er derzeit inaktiv ist, oder zu einem inaktiven Bereich (260) gemacht wird, wenn er gerade ein aktiver Bereich (260) ist, und wobei ein aktiver Bereich (260) ein solcher Bereich (260) ist, der mit einem virtuellen Mikrofon versehen ist, und ein inaktiver Bereich ein Bereich ist, der nicht mit einem virtuellen Mikrofon versehen ist.

3. Verfahren nach Anspruch 1 und 2,
**dadurch gekennzeichnet,**
**dass** das Empfangen einer Berührungseingabe an einem Ort auf dem Display (350), das ein Steuerungsobjekt (300) zeigt, den Schallpegel von aktiven virtuellen Mikrofonen steuert und virtuelle Mikrofone hinzufügen oder entfernen wird.

4. Verfahren nach Anspruch 1,
**dadurch gekennzeichnet,**
**dass** das Empfangen einer Berührungseingabe an einem x,y-Ort auf dem Display (350), gefolgt von einer Mitnahmebewegung zu einem anderen Ort auf dem Display (350) dafür sorgt, dass die Signalverarbeitungseinrichtung (200) das Lenken und Fokussieren von Schall von einem entsprechenden Ort in dem Publikum zu einem anderen Ort ändert.

5. Verfahren nach Anspruch 1,
**dadurch gekennzeichnet,**
**dass** das Lenken und Fokussieren an einem oder mehreren spezifischen Orten in dem Publikum (50) durchgeführt wird durch Implementieren einer dreidimensionalen Positionierung für einen oder mehrere Orte relativ zu der Mikrofonanordnung (100), wobei das Fokussieren berechnet wird aus dem x,y-Ort und der bekannten Höhe sowie dem möglichen Neigungswinkel der Mikrofonanordnung (100) oberhalb von oder vor dem Publikum (50).

6. Verfahren nach Anspruch 5,
**dadurch gekennzeichnet,**
**dass** die Signalverarbeitung, einschließlich der dreidimensionalen Positionierung, auch das Einstellen auf geometrische Aspekte in dem Raum einschließt, welche die Schallausbreitung in dem Raum beeinflussen, in welchem sich das Publikum (50) befindet.

7. Verfahren nach Anspruch 1,
**dadurch gekennzeichnet,**
**dass** das Verfahren die Verwendung von zahlreichen Kameras (150) und Mikrofonanordnungen (100) umfasst, die jeweils verschiedene Bereiche in einem Publikum (50) abdecken, und wobei diese Bereiche auf dem Display (350) präsentiert werden, wobei der eine Bereich im Fokus größer dargestellt wird als die anderen Bereiche, und wobei eine Berührungseingabe auf einem der kleineren Bereiche dafür sorgt, dass dieser Bereich im Fokus liegt, um die virtuellen Mikrofone zu steuern.

8. Verfahren nach Anspruch 1 und 4,
**dadurch gekennzeichnet,**
**dass** das Verfahren die Verwendung von zahlreichen Kameras (150) und Mikrofonanordnungen (100) umfasst, die jeweils verschiedene Bereiche eines Publikums (50) abdecken, und wobei diese Bereiche in gleicher Größe auf dem Display (350) präsentiert werden, so dass es möglich ist, den Schall von den virtuellen Mikrofonen von einem ersten Ort in dem einen Bereich zu einem zweiten Ort in einem anderen Bereich zu steuern, indem eine Berührungs- und
Mitnahmeaktion durchgeführt wird.

9. Verfahren nach Anspruch 1 und 8,
**dadurch gekennzeichnet,**
**dass** das Verfahren die Verwendung von zahlreichen Kameras (150) und Mikrofonanordnungen (100) umfasst, die jeweils unterschiedliche Bereiche eines Publikums (50) abdecken, wobei diese Bereiche auf dem Display (350) als ein Gesamtbereich präsentiert werden, der das Publikum (50) überdeckt, indem die Bilder (250) von jedem Bereich nahtlos miteinander verbunden werden.

10. Verarbeitungseinrichtung (200) zur Steuerung von selektiven Audioausgangssignalen von erfasstem Schall von irgendeinem Ort in einem Publikum (50) mittels eines Systems, das zumindest eine Mikrofonanordnung (100), die sich oberhalb von oder vor dem Publikum (50) befindet, und mindestens eine Kamera (150) aufweist, die auf das Publikum (50) fokussiert ist, wobei die Verarbeitungseinrichtung (200) folgendes aufweist:
- eine Einrichtung zum Empfangen eines Gesamtbildes (250) des Publikums (50) von der Kamera (150) und von Schall von dem Publikum (50) von der Mikrofonanordnung (100);
- eine Einrichtung zum Präsentieren des Gesamtbildes (250) des Publikums (50) zusammen mit Steuerungsobjekten (300) auf einem Display (350) zum Detektieren der Anwesenheit und des Ortes einer Berührungseingabe an einem x,y-Ort innerhalb des Bereiches des Displays (350);
- eine Einrichtung zum Empfangen von einem oder mehreren x,y-Orten von Berührungseingaben auf dem Display (350) und zum Instruieren der Signalverarbeitungseinrichtung (200) zur Durchführung einer spezifischen Aktion an einem entsprechenden Ort oder entsprechenden Orten in dem Publikum (50); und
- eine Einrichtung zum Durchführen der spezifischen Aktion durch die Steuerung des Lenkens, des Fokussierens und des Schallpegels von Schall von den Mikrofonen in der Mikrofonanordnung (100), um auf diese Weise ein oder mehrere virtuelle Mikrofone an einem oder mehreren Orten in dem Publikum (50) zu steuern, wobei die Orte den Eingabeorten auf dem Display (350) entsprechen.

11. Verarbeitungseinrichtung (200) nach Anspruch 10,
**dadurch gekennzeichnet,**
**dass** die Verarbeitungseinrichtung (200) zum Steuern des Lenkens und Fokussierens an einem oder mehreren spezifischen Orten in dem Publikum (50) eine Einrichtung zum Implementieren einer dreidimensionalen Positionierung von einem oder mehreren Orten relativ zu der Mikrofonanordnung (100) umfasst, wobei das Fokussieren berechnet wird mittels der Verarbeitungseinrichtung (200) aus dem x,y-Ort und der bekannten Höhe und dem möglichen Neigungswinkel der Mikrofonanordnung (100) oberhalb von oder vor dem Publikum (50).

12. Verarbeitungseinrichtung (200) nach Anspruch 10,
**dadurch gekennzeichnet,**
**dass** sie eine Einrichtung zum Einstellen für geometrische Aspekte in dem Raum aufweist, welche die Schallausbreitung in dem Raum beeinflussen, in welchem sich das Publikum (50) befindet.

13. Verarbeitungseinrichtung (200) nach Anspruch 10,
**dadurch gekennzeichnet,**
**dass** sie eine Einrichtung zum Einstellen einer tonnenförmigen Verzeichnung aufweist, die von einer an der Kamera (150) angebrachten Fischaugenlinse erzeugt wird, um unverzerrte Bilder auf dem Display (350) zu präsentieren.

14. Verarbeitungseinrichtung (200) nach Anspruch 10,
**dadurch gekennzeichnet,**
**dass** sie eine Einrichtung zum Empfangen von Schallsignalen von zwei oder mehr Mikrofonanordnungen (100) und Bildern von zwei oder mehr Kameras (150) aufweist, um die Bilder von den Kameras auf dem Display (350) zusammen mit den Steuerungsobjekten (300) zu präsentieren.

15. Verarbeitungseinrichtung (200) nach Anspruch 10,
**dadurch gekennzeichnet,**
**dass** sie in das Display (350) integriert ist.

16. Verarbeitungseinrichtung (200) nach Anspruch 10,
**dadurch gekennzeichnet,**
**dass** sie in die Mikrofonanordnung (100) integriert ist.

17. Verarbeitungseinrichtung (200) nach Anspruch 10,
**dadurch gekennzeichnet,**
**dass** sie eine unabhängige Einheit darstellt, die mit dem Display (350) und der Mikrofonanordnung (100) verbunden ist.

18. System zur Steuerung von selektiven Audioausgangssignalen von erfasstem Schall von irgendeinem Ort in einem Publikum (50),
**dadurch gekennzeichnet,**
**dass** sie folgendes aufweist:
- eine Verarbeitungseinrichtung (200) gemäß Anspruch 10, mindestens eine Mikrofonanordnung (100), die sich oberhalb von oder vor dem Publikum (50) befindet, und mindestens eine Kamera (150), die auf das Publikum (50) fokussiert ist, sowie ein Display (350), das die Anwesenheit und den Ort von einer Berührungseingabe detektieren kann, die dazu verwendet werden, ein oder mehrere virtuelle Mikrofone an einem oder mehreren Orten in dem Publikum (50) zu steuern.

19. System nach Anspruch 18,
**dadurch gekennzeichnet,**
**dass** die Kamera (150) in einer Einheit mit der Mikrofonanordnung (100) integriert ist.

20. System nach Anspruch 18,
**dadurch gekennzeichnet,**
**dass** es zwei oder mehr Mikrofonanordnungen (100) aufweist, die sich an verschiedenen Orten oberhalb von oder vor dem Publikum (50) befinden und die mit der Verarbeitungseinrichtung (200) verbunden sind.

## Revendications

1. Procédé de commande de sortie audio sélective de son capturé depuis tout emplacement dans une assistance (50) à l'aide d'un système comprenant au moins un ensemble de microphones (100) situé au-dessus de ladite assistance (50) ou devant celle-ci, au moins une caméra (150) se concentrant sur l'assistance (50), et où le procédé effectue les étapes suivantes dans un dispositif de traitement de signal (200) :
- la réception d'une image d'ensemble (250) de l'assistance (50) à partir de ladite caméra (150), et de son provenant de ladite assistance (50) à l'aide dudit ensemble de microphones (100) ;
- la présentation de ladite image d'ensemble (250) de l'assistance (50) avec des objets de commande (300) sur un écran d'affichage (350) qui peut détecter la présence et l'emplacement d'une entrée tactile à un emplacement x, y dans la région de l'écran d'affichage (350) ;
- la réception d'une entrée ou de plusieurs entrées tactiles à un ou plusieurs emplacements x, y sur ledit écran d'affichage (350), donnant à une action spécifique l'ordre d'être effectuée à un ou des emplacements correspondants de l'assistance (50), et
- l'application d'un traitement de signal dans ledit dispositif de traitement de signal (200) pour effectuer ladite action en commandant la direction, la concentration et le niveau sonore du son provenant des microphones dudit ensemble de microphones (100), commandant ainsi un ou plusieurs microphones virtuels à un ou plusieurs emplacements de l'assistance (50), ledit ou lesdits emplacements correspondant à l'emplacement ou aux emplacements d'entrée sur l'écran d'affichage (350).

2. Procédé selon la revendication 1, **caractérisé en ce que** la réception d'une entrée tactile à un emplacement dudit écran d'affichage (350) montrant l'image (250) de l'assistance (50) modifiera la concentration vers ou depuis cet emplacement en faisant de l'emplacement une région active (260) s'il est actuellement inactif, ou une région inactive (260) s'il est actuellement une région active (260), et où une région active (260) est une région (260) pourvue d'un microphone virtuel, et une région inactive n'est pas pourvue d'un microphone virtuel.

3. Procédé selon les revendications 1 et 2, **caractérisé en ce que** la réception d'une entrée tactile à un emplacement dudit écran d'affichage (350) montrant un objet de commande (300) commandera le niveau sonore d'un ou de microphones virtuels actifs, et ajoutera ou retirera des microphones virtuels.

4. Procédé selon la revendication 1, **caractérisé en ce que** la réception d'une entrée tactile à un emplacement x, y sur ledit écran d'affichage (350) suivie d'un mouvement de traînée vers un autre emplacement sur ledit écran d'affichage (350) amènera le dispositif de traitement de signal (200) à modifier la direction et la concentration de son provenant d'un emplacement correspondant de l'assistance vers un autre.

5. Procédé selon la revendication 1, **caractérisé en ce que** la direction et la concentration à un ou plusieurs emplacements spécifiques de l'assistance (50) sont effectuées en exécutant un positionnement tridimensionnel pour un ou plusieurs emplacements par rapport à l'ensemble de microphones (100), où la concentration est calculée à partir dudit emplacement x, y ainsi que de la hauteur connue et de l'angle d'inclinaison possible de l'ensemble de microphones (100) au-dessus de l'assistance (50) ou devant celle-ci.

6. Procédé selon la revendication 5, **caractérisé en ce que** le traitement de signal comprenant un positionnement tridimensionnel comprend également l'ajustement des aspects géométriques dans la salle influençant la propagation sonore dans la salle où se trouve l'assistance (50).

7. Procédé selon la revendication 1, **caractérisé en ce que** le procédé comprend l'utilisation de plusieurs caméras (150) et ensembles de microphones (100) couvrant chacun différentes régions d'une assistance (50), et où ces régions sont présentées sur l'écran d'affichage (350), une région sur laquelle on est concentré étant affichée plus grande que les autres régions, et où une entrée tactile sur une des régions plus petites amènera à se concentrer sur cette région pour commander les microphones virtuels.

8. Procédé selon les revendications 1 et 4, **caractérisé en ce que** le procédé comprend l'utilisation de plusieurs caméras (150) et ensembles de microphones (100) couvrant chacun différentes régions d'une assistance (50), et où ces régions sont présentées selon une taille égale sur l'écran d'affichage (350), permettant ainsi la commande du son provenant des microphones virtuels depuis un premier emplacement d'une région vers un second emplacement d'une autre région en effectuant une action de toucher et de traînée.

9. Procédé selon les revendications 1 et 8, **caractérisé en ce que** le procédé comprend l'utilisation de plusieurs caméras (150) et ensembles de microphones (100) couvrant chacun différentes régions d'une assistance (50), et où ces régions sont présentées sur l'écran d'affichage (350) sous forme d'une région totale couvrant l'assistance (50) en assemblant de façon continue les images (250) de chaque région ensemble.

10. Dispositif de traitement (200) destiné à commander une sortie audio sélective de sons capturés depuis tout emplacement d'une assistance (50) à l'aide d'un système comprenant au moins un ensemble de microphones (100) situé au-dessus de ladite assistance (50) ou devant celle-ci, au moins une caméra (150) se concentrant sur l'assistance (50), dans lequel le dispositif de traitement (200) comprend :
- un moyen destiné à recevoir une image d'ensemble (250) de l'assistance (50) à partir de ladite caméra (150), et du son provenant de ladite assistance (50) à l'aide de l'ensemble de microphones (100) ;
- un moyen destiné à présenter ladite image d'ensemble (250) de l'assistance (50) avec des objets de commande (300) sur un écran d'affichage (350) pour détecter la présence et l'emplacement d'une entrée tactile à un emplacement x, y dans la région de l'écran d'affichage (350) ;
- un moyen destiné à recevoir un ou plusieurs emplacements x, y d'une entrée ou d'entrées tactiles sur ledit écran d'affichage (350), donnant au dispositif de traitement de signal (200) l'ordre d'effectuer une action spécifique à un ou des emplacements correspondants de l'assistance (50), et
- un moyen destiné à effectuer ladite action en commandant la direction, la concentration et le niveau sonore du son provenant des microphones dudit ensemble de microphones (100), commandant ainsi un ou plusieurs microphones virtuels à un ou plusieurs emplacements de l'assistance (50), ledit ou lesdits emplacements correspondant à l'emplacement ou aux emplacements d'entrée sur l'écran d'affichage (350).

11. Dispositif de traitement (200) selon la revendication 10, **caractérisé en ce que** le dispositif de traitement (200) destiné à commander la direction et la concentration à un ou plusieurs emplacements spécifiques dans l'assistance (50) comprend un moyen destiné à exécuter un positionnement tridimensionnel d'un ou de plusieurs emplacements par rapport à l'ensemble de microphones (100), où la concentration est calculée par ledit dispositif de traitement (200) à partir dudit emplacement x, y ainsi que de la hauteur connue et de l'angle d'inclinaison possible de l'ensemble de microphones (100) au-dessus de l'assistance (50) ou devant celle-ci.

12. Dispositif de traitement (200) selon la revendication 10, **caractérisé en ce qu'**il comprend un moyen pour ajuster les aspects géométriques dans la salle influençant la propagation sonore dans la salle où se trouve l'assistance (50).

13. Dispositif de traitement (200) selon la revendication 10, **caractérisé en ce qu'**il comprend un moyen destiné à ajuster la distorsion en barillet produite par un objectif oeil de poisson utilisé sur ladite caméra (150) pour présenter des images non déformées sur l'écran d'affichage (350).

14. Dispositif de traitement (200) selon la revendication 10, **caractérisé en ce qu'**il comprend un moyen destiné à recevoir des signaux sonores provenant de deux, ou plus, ensembles de microphones (100) et des images provenant de deux, ou plus, caméras (50) pour présenter les images issues des caméras sur ledit écran d'affichage (350) avec lesdits objets de commande (300).

15. Dispositif de traitement (200) selon la revendication 10, **caractérisé en ce qu'**il est intégré dans ledit écran d'affichage (350).

16. Dispositif de traitement (200) selon la revendication 10, **caractérisé en ce qu'**il est intégré dans ledit ensemble de microphones (100).

17. Dispositif de traitement (200) selon la revendication 10, **caractérisé en ce qu'**il s'agit d'une unité autonome reliée audit écran d'affichage (350) et à l'ensemble de microphones (100).

18. Système de commande de sortie audio sélective de sons capturés depuis tout emplacement d'une assistance (50), **caractérisé en ce qu'**il comprend un dispositif de traitement (200) selon la revendication 10, au moins un ensemble de microphones (100) situé au-dessus de l'assistance (50) ou devant celle-ci, et au moins une caméra (150) se concentrant sur l'assistance (50), et un écran d'affichage (350) qui peut détecter la présence et l'emplacement d'un entrée tactile, servant à commander un ou plusieurs microphones virtuels à un ou plusieurs emplacements dans l'assistance (50).

19. Système selon la revendication 18, **caractérisé en ce que** ladite caméra (150) est intégrée dans une unité avec ledit ensemble de microphones (100).

20. Système selon la revendication 18, **caractérisé en ce qu'**il comprend deux, ou plus, ensembles de microphones (100) situés à différents emplacements au-dessus de l'assistance (50) ou devant celle-ci, et reliés audit dispositif de traitement (200).
